# EUROPEAN PATENT SPECIFICATION

(11) **EP 2 539 111 B1**
(45) Date of publication and mention of the grant of the patent: **16.08.2017**
(21) Application number: 11710329.1
(22) Date of filing: 22.02.2011
(51) Int. Cl.: B25C 1/18

(54) **CARTRIDGE OF A FUEL WITH A VERY WIDE EXPLOSIBILITY RANGE ADDITIVE AND THIS FUEL**
KARTUSCHE MIT EINEM BRENNSTOFF MIT EINEM ZUSATZ MIT SEHR BREITEM EXPLOSIONSBEREICH UND DIESER BRENNSTOFF
CARTOUCHE DE COMBUSTIBLE COMPRENANT UN ADDITIF PRÉSENTANT UNE PLAGE D'EXPLOSIVITÉ TRÈS VASTE, ET LEDIT COMBUSTIBLE

(30) Priority: 22.02.2010 FR 1051264
(43) Date of publication of application: 02.01.2013
(73) Proprietor: Société de Prospection et d'Inventions Techniques -SPIT, 26500 Bourg Les Valence (FR)
(72) Inventor: RICORDI, Christian, F-26500 Bourg Les Valence (FR)
(74) Representative: Gevers & Orès
(86) International application number: PCT/IB2011/050734
(87) International publication number: WO 2011/101835

(56) References cited:
- EP-A2- 1 666 571
- FR-A1- 2 240 361
- US-A- 5 842 623
- US-A1- 2004 182 909
- US-A1- 2006 257 707
- US-A1- 2007 008 152
- US-B1- 6 607 567

## Description

The invention relates to the field of fastening points, nails, staples and other fastening elements of this type by means of internal combustion apparatuses wherein a plunger is propelled forward under the action of the fuel ignition to, in turn, drive into a support material the fastening elements previously introduced in a guiding tip for such apparatuses. Today, powder cartridge apparatuses and fluid fuel cartridge apparatuses (liquid/gas), so-called gas apparatuses, are known see EP 1 666 571 A2 or US 2004/182 909 A1. Herein, reference is made to the latter gas apparatuses. Today, the interest of the gas apparatuses does not need to be defined anymore and the reader will not have to read the list of the multiple advantages of liquid fuels for fastening devices.

Generally, a liquefied fuel gas cartridge arranged in the device is used in order, by means of a dosage-injection unit, also placed in the device, to extract a determined dose of fuel from the cartridge and inject it inside the combustion chamber of the device where the fuel is mixed with air before the mixture is ignited. At the cartridge output, the liquid fuel is immediately vaporized. The dosage-injection units can be mechanical or electronic ones.

With the fuels generally used today (propane, butane, etc.), so that the explosion is produced inside the combustion chamber, the mixture gas and air have to be in exclusive stoichiometric proportions. In other words, the mixture has to contain a quite high amount of fuel. And as reminded in FR 2,240,361, when the mixture is made less rich in fuel, a point where the mixture is not flammable anymore is rapidly reached. The higher the amount of fuel, the higher the power of the devices. This may be adverse in the cases where the support materials are quite tender or friable and the parts to be fastened quite brittle.

The invention of the present application aims to solve this problem.

Thus, the invention relates first to a fuel for internal combustion fastening apparatuses, characterized in that it is added with an additive having a very wide explosibility range.

The invention also relates to the use of a fuel for internal combustion fastening apparatuses, characterized in that it is added with an additive having a very wide explosibility range.

Very wide explosibility range means a range of the additive proportions versus the air in mixtures that can be ignited, that extends from a lower limit (LIE) of a few percents of additive to an upper limit (LSE) of several tenths of percents.

Thanks to the invention, the fuel mixture with the additive enables to decrease the lower explosibility limit and thus deplete the mixture in fuel, thanks to which, the explosion pressure can be considerably reduced and, thence, the power of the « motor » for apparatuses, thus allowing to use the devices for applications requiring a reduced power, that is for tender or friable materials and including for short nails. This allows not to unnecessarily use fastening tools and not to destruct, if useful, either the parts to be fastened, or the support materials adapted to receive them.

More generally, the invention allows a power setting and, more particularly, a power reduction by under-dosing the fuel, what is advantageous when proceeding to a dosage with electronic injection.

Thus, the scanning of a wide range of power becomes possible.

The under-dosage can intervene in several ways:
- a reduction of the time of fuel extraction from the cartridge,
- a reduction of the extraction flow rate of fuel from the cartridge,
- a change of dosage-injection unit.

Preferably, a fluid fuel will be considered.

Preferably, the hydrogen is considered as a wide explosibility range additive which, for this element, extends from 4 to 75%.

More difficult to take into consideration, but still possible is the acetylene, the range of which extends from 2.5 to 81%.

It should be noticed that FR 2,240,361 teaches how to mix hydrogen with a mixture of hydrocarbon fuel and air to extend the flammability limits and turn not polluting an internal combustion engine. This document aimed at extending the fuel/air ratio in the region being not very rich in fuel.

Even admitting that the man skilled in the art has found such document considered as not accidental, taking it into account, while it came from the American administration for aeronautics and space (NASA), only aimed at reducing pollution and was a real internal combustion engine, with throttle lever, could only result from a certain inventive activity, not to mention the fact that this document has been published thirty five years ago.

The invention relates to the use of a fuel cartridge for internal combustion fastening apparatuses according to claim 1.

It has been seen that thanks to the invention, with a same mixture, the fuel amount injected in the combustion chamber of the sealing tools can be changed.

The Applicant has had the idea, when a fuel cartridge of the invention is associated with particular fastening elements, thus corresponding to a particular application of the cartridge, to also associate with the cartridge-fastening element set of a particular application, an information support about the particular application. Thanks to those pieces of information, either an operator infers that the mechanical dosing unit is correct for the application, or the tool electronically adapts the injection dose on the basis of the information, the operator having nothing to do in that end.

Preferably, the information support is a RFID label fastened on the cartridge outside or inside.

This invention will be better understood by means of the following description of several embodiments of the cartridge according to the invention, referring to the appended drawing, in which:
- Fig. 1 is a cutaway view of a cartridge for fuel, but with no fuel and with no inner bag;
- Fig. 2 is a view of the cartridge of Fig. 1, filled with a conventional fuel in liquid and vapour phases;
- Fig. 3 is a view of the cartridge of Fig. 2, the fuel having been added in its vapour phase with a gaseous additive;
- Fig. 4 is a view of the cartridge of Fig. 3 with a part of the additive dissolved in the liquid phase;
- Fig. 5 is a view of the cartridge of Fig. 1 with an inner bag filled with a fuel with an additive and bathing in the gaseous phase of a propeller;
- Fig. 6 is a perspective view of a cartridge of the invention with a RFID label; and
- Fig. 7 is a perspective view of a cartridge of the invention with a mechanical dosing unit.

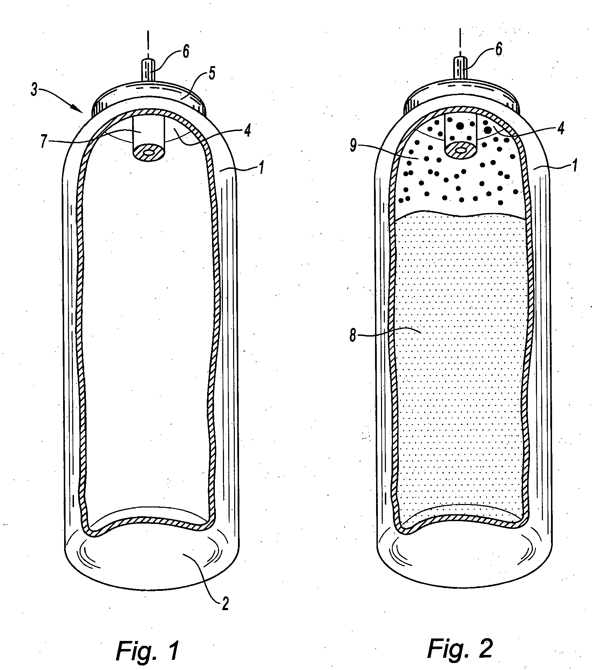

The cartridge of Figs. 1 to 5comprises a classical container 1, generally cylindrical and here in aluminium, extending from a bottom 2 to an output 3 comprising a cup 4 surrounded by a bead 5, for accommodating a connecting adapter for a dosage-injection unit of an equally conventional internal combustion fastening device. Inside the cup 4 an ejection nose piece 6, slidably mounted against the action of a return spring in rest position, as on Fig. 1, is arranged. The spring is located inside the pusher part of a carter 7 under the cup 4.

On Fig. 2, the cartridge 1 is filled with a conventional fuel adapted to be sent to the combustion chamber of a fastening device. The fuel is in a liquid phase 8 in the lower part of the container 1 and in a vapour phase 9 in the upper part, under the cup 4.

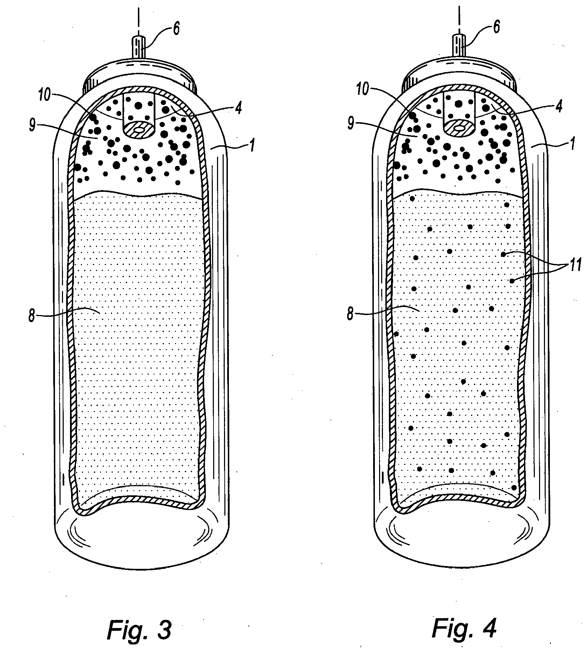

On Fig. 3, the fuel vapour phase 9 is added with an additive 10, here hydrogen, in its gaseous form.

On Fig. 4, not only the vapour phase 9 contains additive (hydrogen) 10, but the liquid phase 8 also contains additive (hydrogen) 11 being dissolved. The liquid additive is represented in a purely illustrative form as it is dissolved into the phase.

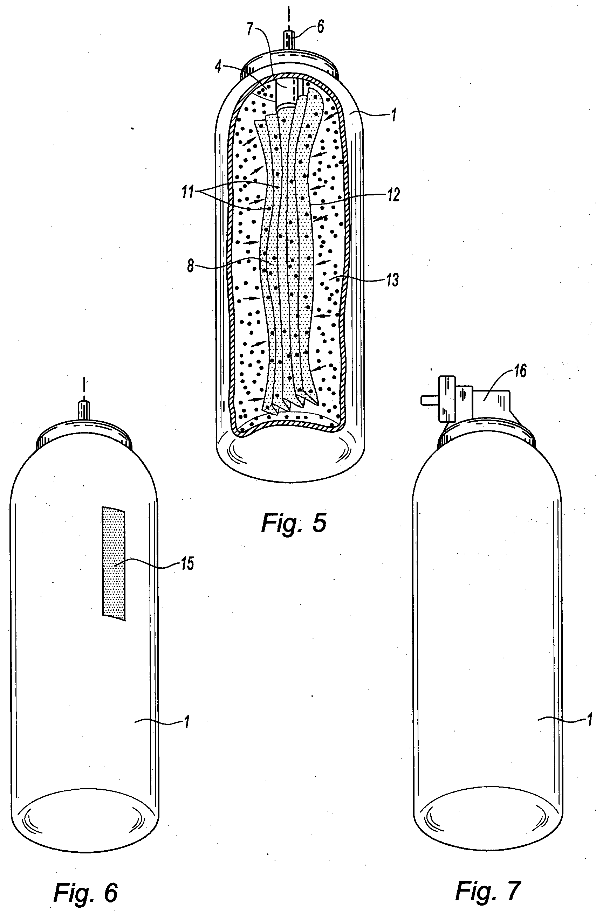

Fig. 5 shows a cartridge that is different from that of Figs. 1-4 through its inner bag 12 fastened to the carter 7 and bathing in a propeller 13 which presses the bag 12 and maintains its content - the fuel 8 and the additive 11 - in liquid phase. The propeller 13 is in gaseous phase, but with here a small proportion of liquid phase. The fuel, added here with hydrogen, is expelled out of the bag 12 as it is spent, the liquid being sprayed at the outlet of the cartridge 1.

The fuel added with its additive is injected in the combustion chamber of the fastening device from the cartridge and through an ejection-dosage unit. Injecting the fuel from a conventional cartridge and providing a second cartridge for the additive with a very wide explosibility range also connected to the combustion chamber through a second ejection-dosage unit, could also be considered.

Referring to Fig. 6, the cartridge 1 comprises a label 15 on which the piece of information about the gas dose to be sent to the combustion chamber for the considered particular application and the considered cartridge is stored, such dose corresponding to the power to be provided. It is thereby a RFID label (radiofrequency identification). Another information support could also be convenient, such as for instance a bar code label. Here, the label is affixed on the outer surface of the cartridge container. Its arrangement inside the container could be considered.

## Claims

1. Use of a fuel cartridge configured to be used in an internal combustion fastening apparatus, containing fuel, said fuel cartridge comprising a container (1) extending from a bottom (2) to an output (3) comprising a cup (4) surrounded by a bead (5), for accommodating a connecting adapter configured to cooperate with a dosage-injection unit of said internal combustion fastening apparatus, **characterized in that** it also contains an additive with a lower explosibility limit of a few percents and an upper explosibility limit of several tenths of percents, said additive being either hydrogen or acetylene, and wherein said cartridge comprises a label (15) supporting an information for fuel dosage such that an internal combustion fastening apparatus electronically adapts the injection dose on the basis of said information.

2. Use according to claim 1, wherein the fuel is in a liquid phase (8) and in a vapour phase (9), the additive (10) being in the vapour phase (9).

3. Use according to claim 2, wherein the liquid phase (8) also contains dissolved additive (11).

4. Use according to claim 1, wherein the fuel (8) and the additive (11) are contained in an inner bag (12).

5. Use according to any of claims 1 to 4, wherein the label is a RFID label (15).

6. Use according to any of claims 1 to 5, on which a mechanical dosing unit (16) is mounted.

7. Use according to any of claims 1 to 6, wherein, inside the cup (4) is arranged an ejection nose piece (6) which is slidably mounted against the action of a return spring in rest position.

8. Use according to claim 7, wherein said spring is located inside a pusher part of a carter (7) under the cup (4).

## Patentansprüche

1. Verwendung einer Brennstoffkartusche, die konfiguriert ist, um in einer Befestigungsvorrichtung mit Verbrennungsmotor verwendet zu werden, und die einen Brennstoff enthält, wobei die Brennstoffkartusche einen Behälter (1) umfasst, der sich von einem Boden (2) bis zu einem Ausgang (3) erstreckt und seinerseits eine Aufnahmebuchse (4) umfasst, die von einem Wulst (5) umgeben wird, um einen Verbindungsadapter aufzunehmen, der konfiguriert ist, um mit einer Dosierungseinspritzeinheit der Befestigungsvorrichtung mit Verbrennungsmotor zusammenzuwirken, **dadurch gekennzeichnet, dass** sie auch einen Zusatz mit einer unteren niedrigeren Explosionsgrenze von wenigen Prozent und einer oberen Explosionsgrenze von mehreren Vielfachen von zehn Prozent enthält, wobei der Zusatz entweder Wasserstoff oder Acetylen ist, und wobei die Kartusche ein Etikett (15) umfasst, das Informationen zur Brennstoffdosierung enthält, sodass eine Befestigungsvorrichtung mit Verbrennungsmotor die Einspritzdosis aufgrund dieser Informationen elektronisch anpasst.

2. Verwendung nach Anspruch 1, wobei sich der Brennstoff in einer flüssigen Phase (8) und in einer Dampfphase (9) befindet, wobei sich der Zusatz (10) in der Dampfphase (9) befindet.

3. Verwendung nach Anspruch 2, wobei die flüssige Phase (8) auch einen gelösten Zusatz (11) enthält.

4. Verwendung nach Anspruch 1, wobei der Brennstoff (8) und der Zusatz (11) in einem Innenbeutel (12) enthalten sind.

5. Verwendung nach einem der Ansprüche 1 bis 4, wobei das Etikett ein RFID-Etikett (15) ist.

6. Verwendung nach einem der Ansprüche 1 bis 5, worauf eine mechanische Dosiereinheit (16) montiert ist.

7. Verwendung nach einem der Ansprüche 1 bis 6, wobei in der Aufnahmebuchse (4) ein Ausstoßdüsenbauteil (6) angeordnet ist, das verschiebbar gegen die Aktion einer Rückstellfeder in einer Ruhestellung montiert ist.

8. Verwendung nach Anspruch 7, wobei die Feder in einem Schieberteil einer Schutzvorrichtung (7) unter der Aufnahmebuchse (4) angebracht ist.

## Revendications

1. Utilisation d'une cartouche de combustible configurée pour être utilisée dans un appareil de fixation à combustion interne, contenant du combustible, ladite cartouche de combustible comprenant un récipient (1) s'étendant depuis un fond (2) jusqu'à une sortie (3) comprenant une coupelle (4) entourée par un bourrelet (5), pour accueillir un adaptateur de raccordement configuré pour coopérer avec une unité de dosage-injection dudit appareil de fixation à combustion interne, **caractérisée en ce qu'**elle contient également un additif avec une limite inférieure d'explosivité de quelques pour cent et une limite supérieure d'explosivité de plusieurs dizaines de pour cent, ledit additif étant l'hydrogène ou l'acétylène, et ladite cartouche comprenant une étiquette (15) portant une information pour le dosage de combustible de telle sorte qu'un appareil de fixation à combustion interne adapte électroniquement la dose d'injection sur la base de ladite information.

2. Utilisation selon la revendication 1, dans laquelle le combustible est dans une phase liquide (8) et dans une phase vapeur (9), l'additif (10) étant dans la phase vapeur (9).

3. Utilisation selon la revendication 2, dans laquelle la phase liquide (8) contient également un additif dissous (11).

4. Utilisation selon la revendication 1, dans laquelle le combustible (8) et l'additif (11) sont contenus dans un sac interne (12).

5. Utilisation selon l'une quelconque des revendications 1 à 4, dans laquelle l'étiquette est une étiquette RFID (15).

6. Utilisation selon l'une quelconque des revendications 1 à 5, sur laquelle une unité de dosage mécanique (16) est montée.

7. Utilisation selon l'une quelconque des revendications 1 à 6, dans laquelle est disposé à l'intérieur de la coupelle (4) un embout d'éjection (6) qui est monté avec faculté de glissement contre l'action d'un ressort de rappel en position de repos.

8. Utilisation selon la revendication 7, dans laquelle ledit ressort est situé à l'intérieur d'une partie poussoir d'un carter (7) sous la coupelle (4).
